# EUROPEAN PATENT SPECIFICATION

(11) **EP 4 534 239 B1**
(45) Date of publication and mention of the grant of the patent: **23.09.2026**
(21) Application number: 23871635.1
(22) Date of filing: 28.08.2023
(51) Int. Cl.: B23Q 3/06, B23Q 3/00, B25B 5/02, B23Q 1/00

(54) **CLAMPING DEVICE**
KLEMMVORRICHTUNG
DISPOSITIF DE SERRAGE

(30) Priority: 26.09.2022 JP 2022152081
(43) Date of publication of application: 09.04.2025
(73) Proprietor: Kosmek Ltd., Kobe-shi, Hyogo 651-2241 (JP)
(72) Inventor: HARUNA, Yosuke, Kobe-shi, Hyogo 651-2241 (JP)
(74) Representative: Dolleymores
(86) International application number: PCT/JP2023/031045
(87) International publication number: WO 2024/070394

(56) References cited:
- EP-A1- 2 489 464
- EP-A1- 3 263 294
- WO-A1-2017/090511
- WO-A1-2021/177385
- WO-A1-2021/177385
- JP-A- 2001 225 236
- JP-A- 2011 177 828
- US-A- 6 161 826
- US-B2- 9 981 391

## Description

### [Technical Field]

The present invention relates to a clamping device which is suitable for detachably attaching a clamping object such as a work pallet, a work, a mold, a tool, or a jig to a base such as a clamping pallet, a table, or a robotic arm.

### [Background Art]

Patent Literature 1 described below recites such a clamping device. The clamping device of the known art is structured as described below.

The clamping device is composed of members such as a cylindrical plug member protruding form a housing, an output rod, an engaging ball, and a piston. In the housing constituting the clamping device, a clamping chamber and an unclamping chamber are provided so that pressure fluid is supplied to and discharged from these chambers. The driving of the clamping device, i.e., the driving of the piston and the output rod is performed by using, for example, compressed air, and each time the driving is performed, compressed air is supplied to and discharged from the clamping chamber and the unclamping chamber.

### [Citation List]

### [Patent Literatures]

[Patent Literature 1] International Publication No. 2021/177385

### [Summary of Invention]

### [Technical Problem]

When a large number of clamping devices each of which is the above-described clamping device are provided, a large facility is required to supply compressed air. Furthermore, piping installations by which compressed air is supplied and discharged are large in number and complicated in structure. These points may not be favorable in terms of energy saving and environment protection. On this account, it is preferable that compressed air is unnecessary or minimum as a driving source.

An object of the present invention is to provide a clamping device which can be driven without requiring compressed fluid such as compressed air or can be driven even if the compressed fluid is not supplied each time the clamping device is driven.

### [Solution to Problem]

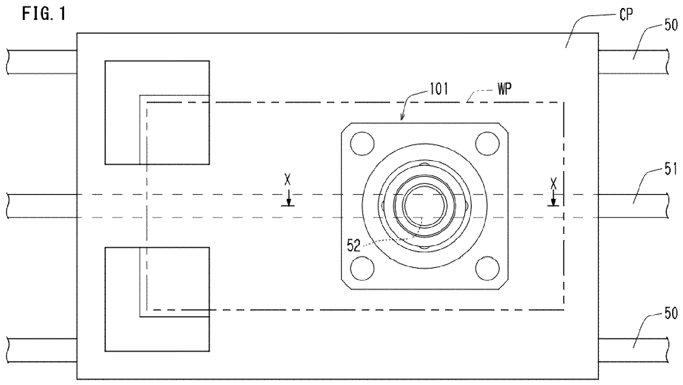

To achieve the object above, a clamping device of the present invention is arranged as described below, as shown in FIG. 1 to FIG. 10, for example.
(1) The clamping device disclosed in the subject application is defined by the appended independent claims.
Variations are defined by the dependent claims.

In the clamping device disclosed in the subject application, the following functions and effects are provided. The clamping device does not have chambers such as a clamping chamber and an unclamping chamber of a known clamping device, to which and from which pressure fluid is supplied and discharged each time the device is driven. In the clamping device, as the above-described operational member is moved (pressed into the cylindrical hole) manually or by an external force, the output rod is driven to move toward the leading end side in the axial direction. In the opposite direction, i.e., toward the base end side in the axial direction, the output rod is driven to move by the above-described biasing member. On this account, the clamping device can be driven without requiring compressed fluid such as compressed air or can be driven even if the compressed fluid is not supplied each time the clamping device is driven.

### [Advantageous Effects of Invention]

The present invention makes it possible to provide a clamping device which can be driven without requiring compressed fluid such as compressed air or can be driven even if the compressed fluid is not supplied each time the clamping device is driven.

### [Brief Description of Drawings]

FIG. 1 is a plan view showing an example of use of a clamping device of the subject application.
FIG. 2 relates to First Embodiment of the present invention and is a sectional side view of the clamping device in a released state.
FIG. 3 is a sectional side view of the clamping device shown in FIG. 2, which is in a locked state.
FIG. 4 relates to Second Embodiment of the present invention and is a sectional side view of a clamping device in a released state.
FIG. 5 is a sectional side view of the clamping device shown in FIG. 4, which is in a locked state.
FIG. 6 relates to Third Embodiment of the present invention and is a sectional side view of a clamping device in a locked state.
FIG. 7 is an enlarged view of a part A shown in FIG. 6.
FIG. 8 relates to Fourth Embodiment of the present invention and is a sectional side view of a clamping device in a released state.
FIG. 9 is a sectional side view of the clamping device shown in FIG. 8, which is in a locked state.
FIG. 10 relates to Fifth Embodiment of the present invention and is a sectional side view of a clamping device in a locked state.

### [Description of Embodiments]

An embodiment of the present invention will be described based on an example of use of a clamping device, in which a work pallet WP that is a clamping object is fixed to a clamping pallet CP that is a base.

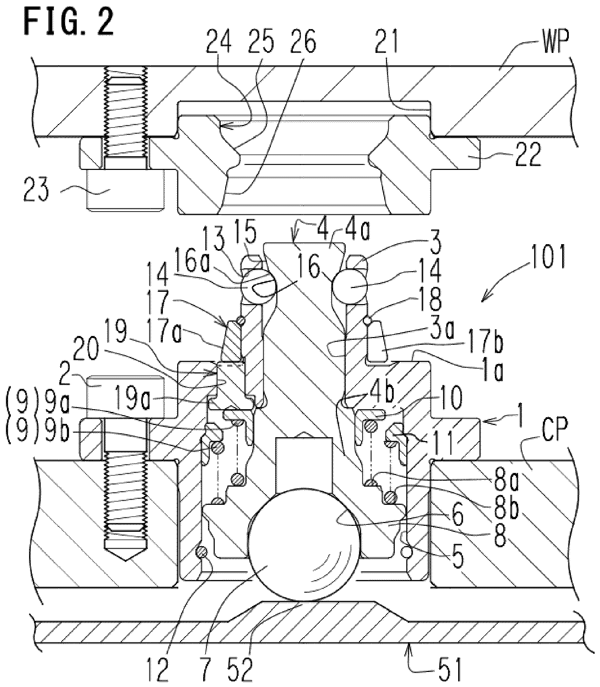

As shown in FIG. 1, a clamping pallet CP to which a clamping device 101 is fixed is arranged to run on two rails 50 that are spaced apart from each other at a predetermined distance. Between the rails 50, a cam member 51 that is long and plate-shaped is provided to extend in the same direction as the rails 50. The cam member 51 has a cam portion 52. As shown in, for example, FIG. 2, the shape of the cam portion 52 is a trapezoid with a shorter top side in a side view.

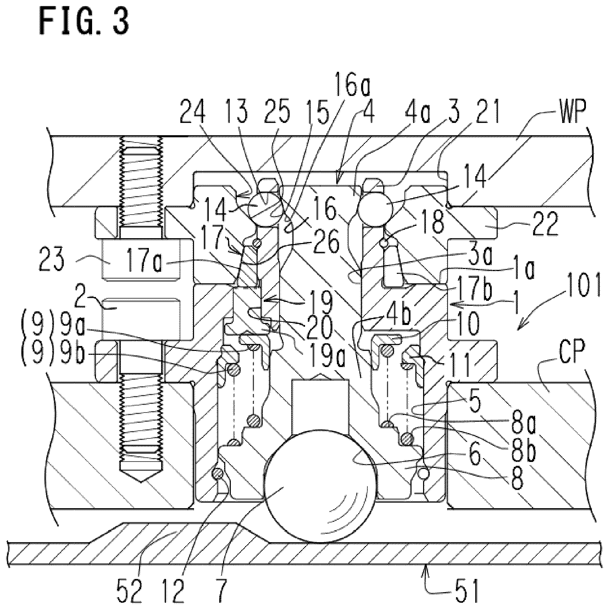

FIG. 2 and FIG. 3 show First Embodiment of the present invention. With reference to FIG. 2 and FIG. 3, the following will describe the structure of the clamping device 101 of First Embodiment. It is noted that FIG. 2 shows a released state of the clamping device 101 and is a cross section cut along a line X-X in FIG. 1.

To the clamping pallet CP, a housing 1 of the clamping device 101 is fixed by means of bolts 2. From the housing 1, a cylindrical plug member 3 which is integrated with the housing 1 protrudes upward. Into a plug member cylindrical hole 3a of the plug member 3, an upper rod part 4a of an output rod 4 is inserted to be movable in an up-down direction (axial direction of the plug member cylindrical hole 3a). The axial direction of the output rod 4 is identical with the axial direction of the plug member cylindrical hole 3a.

A cylindrical hole 5 is formed on the base end side of the housing 1, and a lower rod part 4b of the output rod 4 is inserted into the cylindrical hole 5 to be movable in the up-down direction. The cylindrical hole 5 is larger in diameter than the plug member cylindrical hole 3a. The cylindrical hole 5 and the plug member cylindrical hole 3a are formed to be vertically connected with each other. The axial direction of the cylindrical hole 5 is identical with the axial direction of the plug member cylindrical hole 3a.

In a recess 6 formed in a base-end-side end face of the lower rod part 4b, a ball 7 (sphere, rotational body) as an operational member is accommodated to be rotatable. The ball 7 partially protrudes outward in the axial direction of the cylindrical hole 5. As the operational member, a rotational body such as a roller (not illustrated) may be used in place of the ball 7. (This is applicable to other embodiments, too.)

The recess 6 may not be formed. (This is applicable to other embodiments, too.) In other words, the base-end-side end face of the lower rod part 4b may be entirely flat, for example. In this case, the rotational body such as the ball 7 or the roller is attached to the base-end-side end face of the lower rod part 4b through a support member (not illustrated), so as to be rotatable.

The base end portion of the lower rod part 4b where the recess 6 is formed is a piston portion 8 (large diameter portion) that is larger in diameter than the other parts of the output rod 4. In a space above the piston portion 8 in the cylindrical hole 5, a spring 9 is provided as a biasing member for biasing the piston portion 8 downward (i.e., toward the base end side). The spring 9 is a compression coil spring. The spring 9 of the present embodiment is composed of a first spring 9a and a second spring 9b. The second spring 9b is larger in diameter than the first spring 9a. On the upper surface (leading-end-side surface) of the piston portion 8, a first stepped portion 8a receiving the lower end of the first spring 9a and a second stepped portion 8b receiving the lower end of the second spring 9b are provided in this order from the inner side. Above the first spring 9a, a ring-shaped spring receiver 10 is provided to receive the upper end of the first spring 9a. Above the second spring 9b, a ring-shaped spring receiver 11 is provided to receive the upper end of the second spring 9b. To the base end portion of the cylindrical hole 5, a ring-shaped stopper 12 (retaining ring) is attached to prevent the output rod 4 from dropping off from the cylindrical hole 5.

The spring 9 may not be composed of two springs. As the spring, a spring of another type such as a plate spring may be used in place of the compression coil spring. (This is applicable to other embodiments, too.)

At an upper portion of the circumferential wall of the plug member 3, through holes 13 are formed to be aligned in the circumferential direction at predetermined intervals. In each through hole 13, a ball 14 (engaging ball) is inserted as an engaging member. The through hole 13 supports each ball 14 to be movable between an inner position in the radial direction shown in FIG. 2 and an outer position in the radial direction shown in FIG. 3 (i.e., outside position).

In the outer circumferential wall of the upper rod part 4a of the output rod 4, a pressing surface 15 and a retracting groove 16 are formed and vertically aligned, so as to correspond to each ball 14. The pressing surface 15 is arranged to increase the width upward. As a result of movement to a position where the pressing surface 15 opposes the ball 14, the ball 14 is moved to the outside position so as to protrude outward in the radial direction as compared to the outer circumferential surface of the plug member 3. Furthermore, as a result of movement to a retracting position where the retracting groove 16 opposes the ball 14 and the ball 14 becomes insertable, the ball 14 becomes movable inward in the radial direction as compared to the outer circumferential surface of the plug member 3. While in the present embodiment each of the four balls 14 is inserted into each through hole 13, the number of the balls 14 is not limited to four.

Over a lower portion (base portion) of the circumferential wall of the plug member 3, an annular collet 17 is fitted. The collet 17 has a tapered outer circumferential surface 17a that is tapered off toward the top, and can be elastically decreased in diameter thanks to a single slit 17b extending in the up-down direction. The retaining ring 18 prevents the collet 17 from slipping out from the plug member 3 (i.e., restricts the upward movement). In an upper surface 1a of the housing 1, through holes 20 are formed to be aligned in the circumferential direction at predetermined intervals. In each of the through holes 20, a pressing member 19 pressing the collet 17 upward (i.e., toward the leading end side) is inserted. The pressing member 19 is columnar in shape and has a large diameter portion 19a (flange portion) at a lower end portion. At the large diameter portion 19a, the pressing member 19 is supported from below by the spring receiver 10. The collet 17 is biased upward by the first spring 9a through the pressing member 19 and the spring receiver 10. On this account, even though the upward movement is restricted by the retaining ring 18, the collet 17 is slightly movable in the up-down direction. While in the present embodiment each of the three pressing members 19 is inserted into each through hole 20, the number of the pressing members 19 is not limited to three.

In a lower surface of the work pallet WP, a recess 21 is formed. A ring member 22 is attached to the recess 21, and the ring member 22 is fixed to the work pallet WP by bolts 23. The inner circumferential surface of the ring member 22 forms a fitting hole 24, and a plug member 3 is insertable into the fitting hole 24.

In the fitting hole 24 of the ring member 22, an engaging portion 25 is formed to be tapered and widen upward. Below the engaging portion 25, a tapered inner circumferential surface 26 is formed to be engaged with a tapered outer circumferential surface 17a of the collet 17. The tapered inner circumferential surface 26 is arranged to be tapered off toward the top, i.e., to narrow upward.

While in the present embodiment the fitting hole 24 is formed in the ring member 22, the fitting hole 24 may be formed by the inner circumference of the recess 21 of the work pallet WP. In other words, the engaging portion 25 and the tapered inner circumferential surface 26 described above may be formed directly in the inner circumference of the recess 21 of the work pallet WP.

The above-described clamping device 101 operates as follows.

In the released state shown in FIG. 2, the ball 7 is pressed upward by the cam portion 52 of the cam member 51, i.e., by an external force, and hence the ball 7 is pressed into the cylindrical hole 5 of the housing 1 as compared to the locked state shown in FIG. 3. Due to this, a state in which the ball 7 presses the output rod 4 upward (i.e., toward the leading end side) against the biasing force of the spring 9 and the output rod 4 ascends has been established. As the output rod 4 has ascended, the ball 14 of the plug member 3 is movable to the retracting position inside the retracting groove 16. To a space above the clamping device 101 in the released state shown in FIG. 2, the work pallet WP is transported.

When the work pallet WP is clamped by the clamping pallet CP, to begin with, the work pallet WP is descended and the plug member 3 is inserted into the fitting hole 24 of the ring member 22. At this stage, the tapered inner circumferential surface 26 of the fitting hole 24 is in contact with the tapered outer circumferential surface 17a of the collet 17 in an enlarged diameter state, and a slight gap is formed between the upper surface 1a (seating surface) of the housing 1 and the lower surface of the ring member 22. Thereafter, as the clamping pallet CP is driven to run on the rails 50, the cam portion 52 of the cam member 51 is separated from the ball 7. As a result, the external force becomes no longer exerted by the cam portion 52, and the spring 9 presses the output rod 4 downward (i.e., toward the base end side) and the output rod 4 descends. As the output rod 4 descends, a pressing portion 16a constituting part of the retracting groove 16 formed in the output rod 4 presses the ball 14 of the plug member 3 to a protruding position on the outer side in the radial direction. Subsequently, the pressing surface 15 of the output rod 4 presses the engaging portion 25 of the work pallet WP (ring member 22) downward through the ball 14. As a result, the collet 17 decreases in diameter and slightly descends together with the work pallet WP. Due to this, the lower surface of the ring member 22 is received by the upper surface 1a of the housing 1, and the clamping device 101 is switched from the released state shown in FIG. 2 to the locked state shown in FIG. 3.

When the clamping device 101 is switched from the locked state shown in FIG. 2 to the released state shown in FIG. 3, as the clamping pallet CP is driven to run on the rails 50, the ball 7 hits the cam portion 52 of the cam member 51 and the ball 7 climbs on the cam portion 52. Due to this, the ball 7 presses the output rod 4 upward (i.e., toward the leading end side) against the biasing force of the spring 9, with the result that the output rod 4 ascends. As the output rod 4 ascends, the retracting groove 16 formed in the output rod 4 is positioned to oppose the ball 14 of the plug member 3, and the ball 14 becomes movable into the retracting groove 16 (i.e., inward in the radial direction of the output rod 4). As a result, as shown in FIG. 2, it becomes possible to smoothly detach the work pallet WP from the clamping pallet CP. In this connection, because the ball 7 is rotatable, a lateral reaction force from the cam portion 52 is partially diverted by the ball 7 when the ball 7 hits the cam portion 52. This makes it possible to prevent the entanglement between the inner circumferential surface of the cylindrical hole 5 and the piston portion 8 of the output rod 4. On this account, it is possible to smoothly move the output rod 4 toward the leading end side.

The clamping device 101 does not have chambers such as a clamping chamber and an unclamping chamber of a known clamping device, to which and from which pressure fluid is supplied and discharged each time the device is driven. In the clamping device 101, as the ball 14 is moved by the external force (i.e., pressed into the cylindrical hole 5), the output rod 4 is driven to move toward the leading end side. Toward the base end side that is opposite to the leading end side, the output rod 4 is driven to move by the spring 9. The clamping device 101 can therefore be driven without requiring compressed fluid such as compressed air. It is noted that the ball 7 may be manually moved.

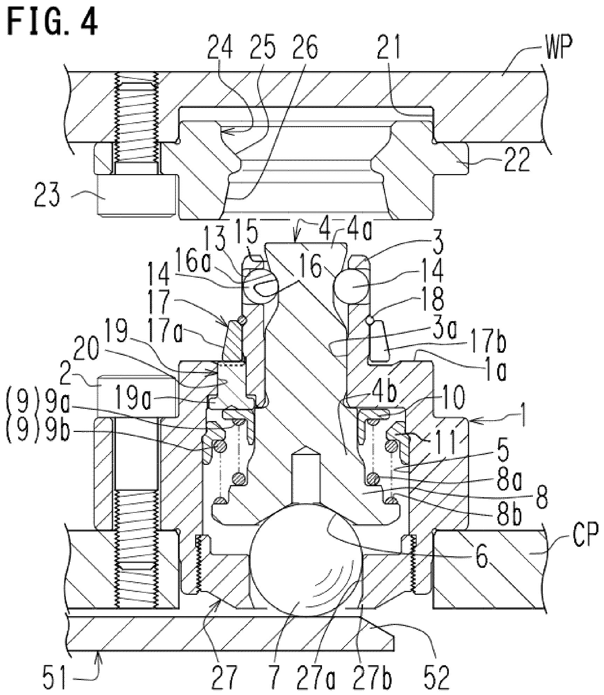

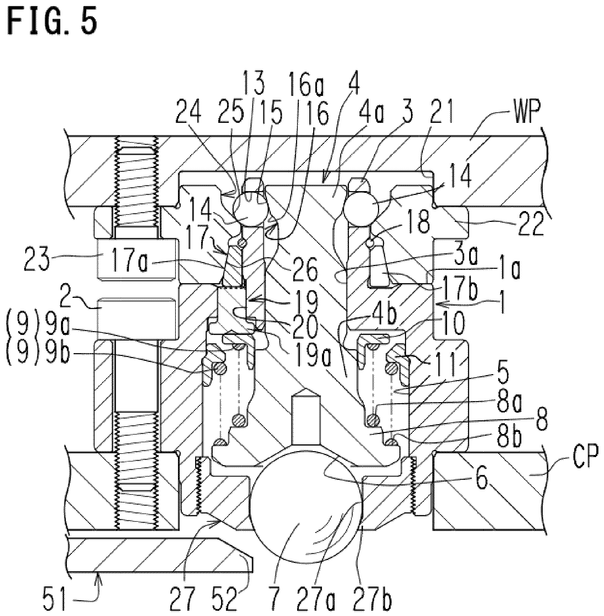

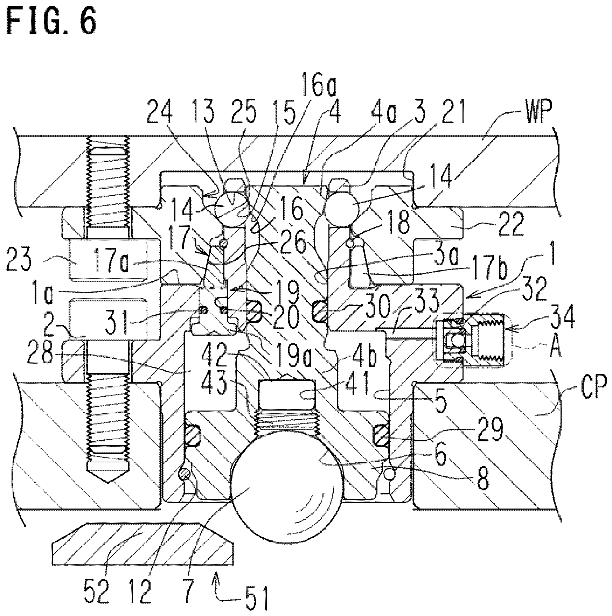

FIG. 4 and FIG. 5 show Second Embodiment of the present invention. A clamping device of Second Embodiment further includes a guide component 27 that is attached to a base end portion of the cylindrical hole 5 of the housing 1. This is the difference from the clamping device of First Embodiment. It is noted that members of the clamping device of Second Embodiment, which are identical with the members of the clamping device of First Embodiment, are denoted by the same reference symbols. (The same applies to embodiments shown in FIG. 6 and subsequent figures.)

The guide member 27 has a sliding surface 27a which is formed to catch the ball 7 and is arranged to oppose the ball 7. Below the sliding surface 27a, a protrusion 27b is provided to protrude toward the ball 7. The protrusion 27b is provided to prevent the ball 7 from dropping due to the gravity. The sliding surface 27a and the protrusion 27b are formed to be vertically connected with each other.

The guide member 27 of the present embodiment is a ring-shaped member. The sliding surface 27a is a single straight surface in parallel to the axial direction of the output rod 4 and is circular in shape in plan view. Between the ball 7 and the sliding surface 27a, there is a slight gap.

As shown in FIG. 5, in the present embodiment, when the clamping device is in the locked state, the ball 7 is not supported from below by the cam member 51. However, the ball 7 does not drop thanks to the above-described protrusion 27b. When the ball 7 hits the cam portion 52 of the cam member 51 as the clamping pallet CP is driven to run on the rails 50, a lateral reaction force from the cam portion 52 is received by the housing 1 through the guide member 27 having the above-described sliding surface 27a. On this account, it is possible to suppress the lateral reaction force from being applied to the output rod 4 and to further smoothly move the output rod 4 toward the leading end side.

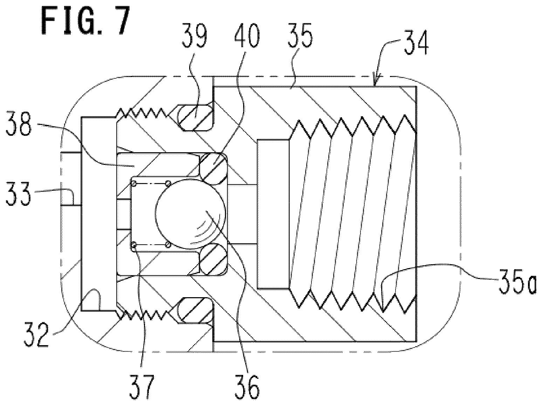

FIG. 6 and FIG. 7 show Third Embodiment of the present invention. A clamping device of Third Embodiment includes a biasing member configured to press and move the output rod 4 downward (i.e., toward the base end side). This is the difference from the clamping device of First Embodiment. In addition to this, the clamping device of Third Embodiment is different from the clamping device of Second Embodiment in terms of means for preventing the ball 7 from dropping.

In the present embodiment, a space above the piston portion 8 in the cylindrical hole 5 is arranged to function as a pressurized gas chamber 28. The piston portion 8 of the output rod 4 is hermetically inserted into the cylindrical hole 5 through a sealing member 29. The upper rod part 4a of the output rod 4 is hermetically inserted into the plug member cylindrical hole 3a through a sealing member 30. The pressing member 19 is hermetically inserted into the through hole 20 through a sealing member 31. With these arrangements, the space above the piston portion 8 in the cylindrical hole 5 functions as the pressurized gas chamber 28.

The pressurized gas chamber 28 is filled with compressed air that is pressurized gas for locking (clamping) and is supplied through a filling port 32. The compressed air with which the pressurized gas chamber 28 is filled is the biasing member configured to press and move the output rod 4 downward (i.e., toward the base end side). The filling port 32 and the pressurized gas chamber 28 are connected with each other by a port-side path 33 formed in the housing 1. To the filling port 32, an air filler 34 is attached.

As shown in FIG. 7, the air filler 34 includes members such as a cylindrical main body portion 35, a ball 36, a spring 37, and a retaining cylinder 38. The main body portion 35 is hermetically fixed to the filling port 32 through a sealing member 39. To an end portion on the port-side path 33 side of the main body portion 35, the retaining cylinder 38 is hermetically fixed through an O-ring 40 by pressure. In the retaining cylinder 38, the ball 36 and the spring 37 are accommodated. To a female screw hole 35a of the main body portion 35, an air filling tube (not illustrated) is connected. The inside of the air filling tube always receives the pressure of the compressed air. To the pressurized gas chamber 28, compressed air is supplied from the air filling tube through the air filler 34 and the port-side path 33, only by the amount leaking out from the pressurized gas chamber 28. The ball 36, the spring 37, and the O-ring 40 constitute a check valve. This check valve allows the compressed air to flow from the air filling tube to the port-side path 33, but does not allow the compressed air to flow in the opposite direction. The ball 36 is a valve body whereas the O-ring 40 is a valve seat. When the pressure of the compressed air in the pressurized gas chamber 28 reaches a predetermined value, the ball 36 is pressed onto the O-ring 40 by the spring 37 and the check valve is closed.

With this arrangement, when the clamping device is switched from the released state to the locked state shown in FIG. 6, the compressed air with which the pressurized gas chamber 28 is filled presses and moves the output rod 4 downward (i.e., toward the base end side). To the pressurized gas chamber 28, compressed air is supplied only by the amount leaking out from the pressurized gas chamber 28. On this account, the use amount of the compressed air is extremely small. Therefore, while a facility for supplying the compressed air such as an air compressor is still required, the facility may be very small in size.

At a central portion of the bottom of the recess 6 formed in the output rod 4, a bottomed hole 41 is provided to extend in the axial direction of the output rod 4. At the bottom of this hole 41, a magnet 42 is provided. As a plug 43 is inserted below the magnet 42 to function as a filler, the magnet 42 is fixed to the hole 41. The output rod 4, the plug 43, and the ball 7 are made of a magnetic material such as iron, which is attracted to the magnet.

With the arrangement above, the magnet 42 prevents the ball 7 from dropping due to the gravity.

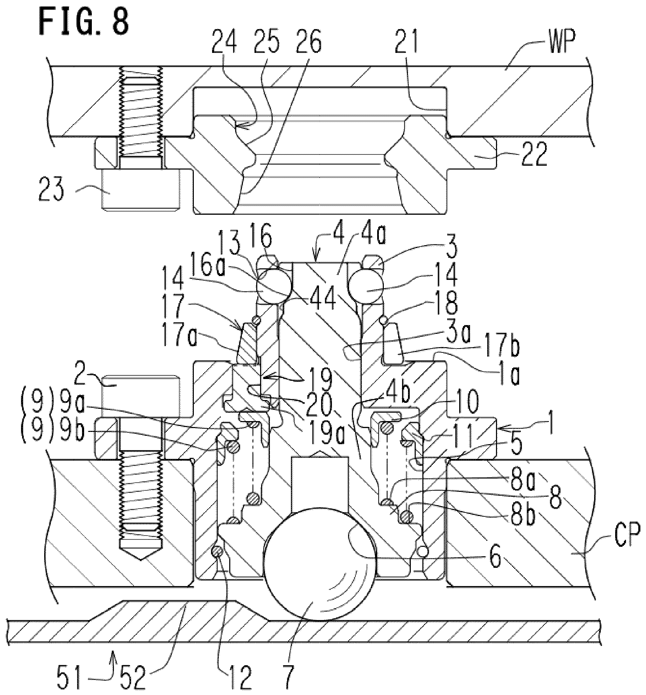

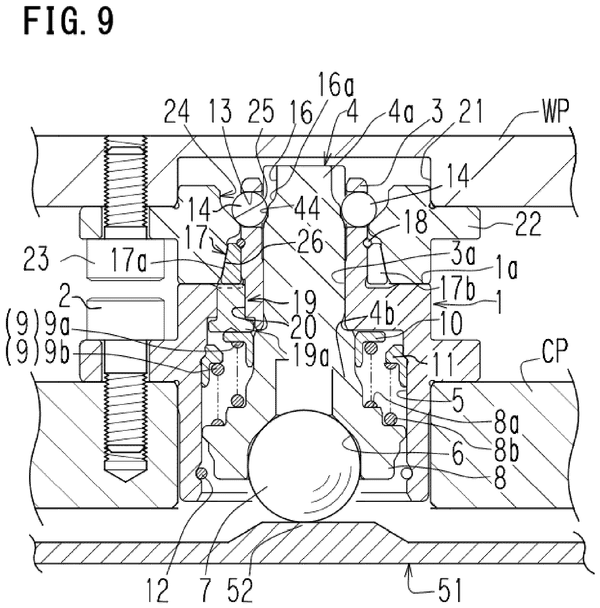

FIG. 8 and FIG. 9 show Fourth Embodiment of the present invention. The clamping device of First Embodiment is switched to the released state as the ball 7 presses and moves the output rod 4 upward (i.e., toward the leading end side), and is switched to the locked state as the spring 9 presses and moves the output rod 4 downward (i.e., toward the base end side). On the other hand, the clamping device of Fourth Embodiment is switched to the locked state as the ball 7 presses and moves the output rod 4 upward (i.e., toward the leading end side), and is switched to the released state as the spring 9 presses and moves the output rod 4 downward (i.e., toward the base end side).

In the outer circumferential wall of the upper rod part 4a of the output rod 4, a retracting groove 16 and a support surface 44 are formed and vertically aligned, so as to correspond to each ball 14. As a result of movement to a retracting position where the retracting groove 16 opposes the ball 14 and the ball 14 becomes insertable, the ball 14 becomes movable inward in the radial direction as compared to the outer circumferential surface of the plug member 3. The support surface 44 is formed as a straight surface in parallel to the axial direction of the plug member cylindrical hole 3a. The support surface 44 is formed to be orthogonal to the axial direction of the through hole 13. As a result of movement to a position where the support surface 44 opposes the ball 14, the ball 14 is moved to the outside position so as to protrude outward in the radial direction as compared to the outer circumferential surface of the plug member 3.

In the released state shown in FIG. 8, the spring 9 presses the output rod 4 downward (i.e., toward the base end side) and the output rod 4 is in a descended state. As the output rod 4 descends, the ball 14 of the plug member 3 is movable to the retracting position inside the retracting groove 16.

When the work pallet WP is clamped by the clamping pallet CP, to begin with, the work pallet WP is descended and the plug member 3 is inserted into the fitting hole 24 of the ring member 22. Thereafter, as the clamping pallet CP is driven to run on the rails 50, the ball 7 hits the cam portion 52 of the cam member 51 and the ball 7 climbs on the cam portion 52. Due to this, the ball 7 presses the output rod 4 upward (i.e., toward the leading end side) against the biasing force of the spring 9, with the result that the output rod 4 ascends. As the output rod 4 ascends, a pressing portion 16a constituting part of the retracting groove 16 formed in the output rod 4 presses the ball 14 of the plug member 3 to a protruding position on the outer side in the radial direction, and then the ball 14 is engaged with the engaging portion 25. Consequently, the clamping device is switched from the released state shown in FIG. 8 to the locked state shown in FIG. 9.

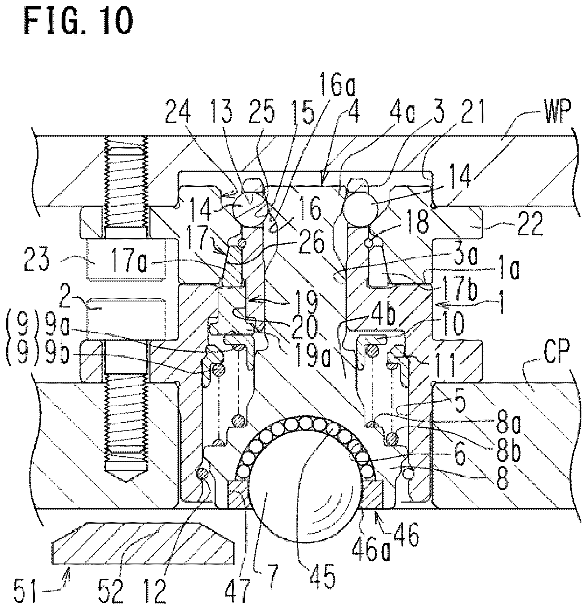

FIG. 10 shows Fifth Embodiment of the present invention. A clamping device of Fifth Embodiment is arranged so that plural ball bodies 45 are rotatably provided between the bottom surface of a recess 6 accommodating a ball 7 and the ball 7. The clamping device of Fifth Embodiment is different from the clamping device of First Embodiment in this regard. This arrangement allows the ball 7 to rotate further smoothly. On this account, when the ball 7 hits a cam portion 52, a lateral reaction force from the cam portion 52 is further effectively diverted by the ball 14.

A detachment prevention ring 46 which prevents the ball bodies 45 from being detached from between the bottom surface of the recess 6 and the ball 7 is fixed by pressure to a circular fitting portion 47 formed at a base end portion of the output rod 4. The inner circumferential surface of the detachment prevention ring 46 is formed to narrow downward, and has a protrusion 46a at the lower end portion to protrude toward the ball 7 side. The protrusion 46a is provided to prevent the ball 7 from dropping due to the gravity.

This arrangement is able to prevent the ball bodies 45 from being detached from between the bottom surface of the recess 6 and the ball 7 and to prevent the ball 7 from dropping due to the gravity by the above-described protrusion 46a.

The present invention is not limited to the embodiments above, and elements of the embodiments above can be combined as appropriate or various changes can be made to the embodiments, as long as not departing from the scope of the appended claims.

For example, the above-described embodiments are changeable as follows.

The ball 7 (operational member) may be pressed by a human hand (i.e., manually) to move the output rod 4 toward the leading end side.

While the cam member 51 is stationary (i.e., fixed) in the embodiments above, the ball 7 (operational member) may be pressed and moved by the cam member 52 as the cam portion 51 is moved. Furthermore, means for generating the external force for moving the ball 7 (operational member) is not limited to a member such as the cam member 51.

In the clamping device shown in FIG. 6, pressurized gas different from the compressed air, e.g., compressed nitrogen gas, may be used instead of the compressed air, as pressurized gas (biasing member) with which the pressurized gas chamber 28 is filled.

The posture of the clamping device may be different from the vertical posture described above, and may be turned upside down, may be lateral, or may be inclined.

The clamping device may be fixed to a table or a leading end portion of a robotic arm, for example. The clamping object may be a work, a mold, a tool, or a jig.

### [Reference Signs List]

1: housing, 3: plug member, 3a: plug member cylindrical hole, 4: output rod, 5: cylindrical hole, 6: recess, 7: ball (operational member), 9: spring (biasing member), 13: through hole, 14: ball (engaging member), 24: fitting hole, 25: engaging portion, 27: guide member, 27a: sliding surface, 27b: protrusion, 41: hole, 42: magnet, 45: ball body, 46: detachment prevention ring, 46a: protrusion, 101: clamping device, WP: work pallet (clamping object)

## Claims

1. A clamping device comprising:
a housing (1);
a cylindrical plug member (3) which protrudes from the housing (1);
an output rod (4) which is inserted into a plug member cylindrical hole (3a) of the plug member (3) so as to be movable in an axial direction of the plug member cylindrical hole (3a);
an engaging member (14) which is inserted into a through hole (13) formed in a circumferential wall of the plug member (3), the engaging member (14) being movable in the through hole (13) due to movement of the output rod (4) in the axial direction and being able to make contact with an engaging portion (25) of a fitting hole (24) formed in a clamping object (WP) so that the plug member (3) becomes insertable;
a cylindrical hole (5) which is formed on the base end side of the housing (1), the output rod (4) being inserted into the cylindrical hole (5) to be movable in the axial direction; **characterised in that** the clamping device further comprises:
an operational member (7) which is rotatably provided at a base-end-side end face of the output rod (4), the operational member (7) being configured to press and move the output rod (4) toward the leading end side in the axial direction; and a biasing member (9) which is provided inside the cylindrical hole (5) or with which the cylindrical hole (5) is filled, the biasing member (9) being configured to press and move the output rod (4) toward the base end side in the axial direction,
a recess (6) being formed in the base-end-side end face of the output rod (4), and
the operational member (7) being rotatably accommodated in the recess (6).

2. The clamping device according to claim 1, wherein,
the operational member (7) is a sphere or a roller.

3. The clamping device according to claim 1 or 2, further comprising
a guide member (27) which is attached to a base end portion of the cylindrical hole (5),
the guide member (27) including:
a sliding surface (27a) which is formed to catch the operational member (7) and is arranged to oppose the operational member (7); and
a protrusion (27b) which is configured to prevent the operational member (7) from dropping and protrudes toward the operational member (7).

4. The clamping device according to claim 1, wherein,
a hole (41) is provided at a central part of the bottom of the recess (6) to extend in the axial direction,
a magnet (42) is accommodated in the hole (41), and
the output rod (4) and the operational member (7) are made of a magnetic material which is attracted to the magnet.

5. The clamping device according to any preceding claim, wherein, ball bodies (45) are rotatably provided between a bottom surface of the recess (6) and the operational member (7).

6. The clamping device according to claim 5, wherein,
a detachment prevention ring (46) which prevents the ball bodies (45) from being detached from between the bottom surface of the recess (6) and the operational member (7) is fixed to a base end portion of the output rod (4), and
the detachment prevention ring (46) has a protrusion (46a) which is configured to prevent the operational member (7) from dropping and protrudes toward the operational member (7).

7. A clamping device comprising:
a housing (1);
a cylindrical plug member (3) which protrudes from the housing (1);
an output rod (4) which is inserted into a plug member cylindrical hole (3a) of the plug member (3) so as to be movable in an axial direction of the plug member cylindrical hole (3a);
an engaging member (14) which is inserted into a through hole (13) formed in a circumferential wall of the plug member (3), the engaging member (14) being movable in the through hole (13) due to movement of the output rod (4) in the axial direction and being able to make contact with an engaging portion (25) of a fitting hole (24) formed in a clamping object (WP) so that the plug member (3) becomes insertable;
a cylindrical hole (5) which is formed on the base end side of the housing (1), the output rod (4) being inserted into the cylindrical hole (5) to be movable in the axial direction; **characterised in that** the clamping device further comprises:
an operational member (7) which is rotatably provided at a base-end-side end face of the output rod (4), the operational member (7) being configured to press and move the output rod (4) toward the leading end side in the axial direction; and
a biasing member (9) which is provided inside the cylindrical hole (5) or with which the cylindrical hole (5) is filled, the biasing member (9) being configured to press and move the output rod (4) toward the base end side in the axial direction,
the operational member (7) being a sphere or a roller.

8. A clamping device comprising:
a housing (1);
a cylindrical plug member (3) which protrudes from the housing (1);
an output rod (4) which is inserted into a plug member cylindrical hole (3a) of the plug member (3) so as to be movable in an axial direction of the plug member cylindrical hole (3a);
an engaging member (14) which is inserted into a through hole (13) formed in a circumferential wall of the plug member (3), the engaging member (14) being movable in the through hole (13) due to movement of the output rod (4) in the axial direction and being able to make contact with an engaging portion (25) of a fitting hole (24) formed in a clamping object (WP) so that the plug member (3) becomes insertable;
a cylindrical hole (5) which is formed on the base end side of the housing (1), the output rod (4) being inserted into the cylindrical hole (5) to be movable in the axial direction; **characterised in that** the clamping device further comprises:
an operational member (7) which is rotatably provided at a base-end-side end face of the output rod (4), the operational member (7) being configured to press and move the output rod (4) toward the leading end side in the axial direction;
a biasing member (9) which is provided inside the cylindrical hole (5) or with which the cylindrical hole (5) is filled, the biasing member (9) being configured to press and move the output rod (4) toward the base end side in the axial direction; and
a guide member (27) which is attached to a base end portion of the cylindrical hole (5),
the guide member (27) including:
a sliding surface (27a) which is formed to catch the operational member (7) and is arranged to oppose the operational member (7); and
a protrusion (27b) which is configured to prevent the operational member (7) from dropping and protrudes toward the operational member (7).

## Patentansprüche

1. Klemmvorrichtung, umfassend:
Ein Gehäuse (1);
ein zylindrisches Steckelement (3), das aus dem Gehäuse (1) herausragt;
eine Ausgangsstange (4), die in ein zylindrisches Loch (3a) des Steckelements (3) eingesetzt wird, sodass sie sich in axialer Richtung des zylindrischen Lochs des Steckelements (3a) bewegen kann;
ein Eingriffselement (14), das in ein Durchgangsloch (13) eingesetzt wird, das in einer umlaufenden Wand des Steckelements (3) gebildet ist, wobei das einrastende Element (14), aufgrund der Bewegung der Ausgangsstange (4) in axialer Richtung im Durchgangsloch (13) beweglich ist und Kontakt mit einem Eingriffsabschnitt (25) einer Passbohrung (24) an einem Spannobjekt (WP) aufnehmen kann, sodass das Steckelement (3) einsetzbar wird;
ein zylindrisches Loch (5), das an der Basis des Gehäuses (1) gebildet ist, wobei die Ausgangsstange (4) in das zylindrische Loch (5) eingesetzt wird, um sich in axialer Richtung bewegen zu können;
**dadurch gekennzeichnet, dass** die Klemmvorrichtung ferner Folgendes umfasst:
Ein Bedienungselement (7), das drehbar an der Basisendseite der Stirnfläche der Ausgangsstange (4) angebracht ist, wobei das Bedienungselement (7) so konfiguriert ist, dass es die Ausgangsstange (4) in axialer Richtung zur Vorderseite drückt und bewegt; und ein Vorspannelement (9), das im Zylinderloch (5) angebracht ist oder mit dem das Zylinderloch (5) gefüllt ist, wobei das Vorspannelement (9) so konfiguriert ist, dass es die Ausgangsstange (4) in axialer Richtung zur Basisendseite drückt und bewegt,
eine Vertiefung (6), die an der basisseitigen Endfläche der Ausgangsstange (4) gebildet ist, und
wobei das Bedienelement (7) drehbar in der Vertiefung (6) untergebracht ist.

2. Klemmvorrichtung nach Anspruch 1, wobei das Bedienelement (7) eine Kugel oder eine Rolle ist.

3. Klemmvorrichtung nach Anspruch 1 oder 2, die ferner umfasst:
Ein Führungselement (27), das an einem Basisendabschnitt des zylindrischen Lochs (5) befestigt ist,
das Führungselement (27), umfassend:
Eine Gleitfläche (27a), die so geformt ist, dass sie das Bedienungselement (7) auffängt, und die so angeordnet ist, dass sie dem Bedienungselement (7) entgegenwirkt; und
einen Vorsprung (27b), der so konfiguriert ist, dass das Bedienungselement (7) am Herunterfallen gehindert wird und in Richtung des Bedienungselements (7) vorsteht.

4. Klemmvorrichtung nach Anspruch 1, wobei,
ein Loch (41) an einem zentralen Teil des Bodens der Vertiefung (6) vorgesehen ist, um sich in der axialen Richtung zu erstrecken, ein Magnet (42) im Loch (41) untergebracht ist, und die Ausgangsstange (4) sowie das Bedienelement (7) aus einem magnetischen Material, das vom Magneten angezogen wird.

5. Klemmvorrichtung nach einem vorhergehenden Anspruch, wobei die Kugelkörper (45) zwischen einer Bodenfläche der Vertiefung (6) und dem Bedienelement (7) drehbar bereitgestellt sind.

6. Klemmvorrichtung nach Anspruch 5, wobei,
ein Trennschutzring (46), der verhindert, dass die Kugelkörper (45) zwischen der Bodenfläche der Vertiefung (6) und dem Bedienungselement (7) herausfallen, ist am Basisende der Ausgangsstange (4) befestigt, und der Trennschutzring (46) einen Vorsprung (46a) aufweist, der konfiguriert ist, zu verhindern, dass das Bedienungselement (7) herunterfällt und steht in Richtung des Bedienungselements (7) hervor.

7. Klemmvorrichtung, umfassend:
Ein Gehäuse (1);
ein zylindrisches Steckelement (3), das aus dem Gehäuse (1) herausragt;
eine Ausgangsstange (4), die in ein zylindrisches Loch (3a) des Steckelements (3) eingesetzt wird, sodass sie sich in axialer Richtung des zylindrischen Lochs des Steckelements (3a) bewegen kann;
ein Eingriffselement (14), das in ein Durchgangsloch (13) eingesetzt wird, das in einer umlaufenden Wand des Steckelements (3) gebildet ist, wobei das einrastende Element (14), aufgrund der Bewegung der Ausgangsstange (4) in axialer Richtung im Durchgangsloch (13) beweglich ist und Kontakt mit einem Eingriffsabschnitt (25) einer Passbohrung (24) an einem Spannobjekt (WP) aufnehmen kann, sodass das Steckelement (3) einsetzbar wird;
ein zylindrisches Loch (5), das an der Basisendseite des Gehäuses (1) gebildet ist, wobei die Ausgangsstange (4) in das zylindrische Loch (5) eingesetzt wird, um in der axialen Richtung beweglich zu sein; **dadurch gekennzeichnet, dass** die Klemmvorrichtung außerdem umfasst:
Ein Bedienungselement (7), das drehbar an einer basisendseitigen Endfläche der Ausgangsstange (4) bereitgestellt ist, wobei das Bedienungselement (7) so konfiguriert ist, dass es die Ausgangsstange (4) in der axialen Richtung der Führungsendseite drückt und bewegt; und
ein Vorspannelement (9), das im zylindrischen Loch (5) bereitgestellt ist oder mit dem das zylindrische Loch (5) gefüllt ist, wobei das Vorspannelement (9) so konfiguriert ist, dass es die Ausgangsstange (4) in Richtung der Basisendseite in der axialen Richtung drückt und bewegt,
wobei das Bedienungselement (7) eine Kugel oder eine Rolle ist.

8. Klemmvorrichtung, umfassend:
Ein Gehäuse (1);
ein zylindrisches Steckelement (3), das aus dem Gehäuse (1) herausragt;
eine Ausgangsstange (4), die in ein zylindrisches Loch (3a) des Steckelements (3) eingesetzt wird, sodass sie sich in axialer Richtung des zylindrischen Lochs des Steckelements (3a) bewegen kann;
ein Eingriffselement (14), das in ein Durchgangsloch (13) eingesetzt wird, das in einer umlaufenden Wand des Steckelements (3) gebildet ist, wobei das einrastende Element (14), aufgrund der Bewegung der Ausgangsstange (4) in axialer Richtung im Durchgangsloch (13) beweglich ist und Kontakt mit einem Eingriffsabschnitt (25) einer Passbohrung (24) an einem Spannobjekt (WP) aufnehmen kann, sodass das Steckelement (3) einsetzbar wird;
ein zylindrisches Loch (5), das an der Basis des Gehäuses (1) gebildet ist, wobei die Ausgangsstange (4) in das zylindrische Loch (5) eingesetzt wird, um sich in der axialen Richtung bewegen zu können;
**dadurch gekennzeichnet, dass** die Klemmvorrichtung ferner Folgendes umfasst:
Ein Bedienungselement (7), das drehbar an einer basisendseitigen Endfläche der Ausgangsstange (4) bereitgestellt ist, wobei das Bedienungselement (7) so konfiguriert ist, dass es die Ausgangsstange (4) in der axialen Richtung der Führungsendseite drückt und bewegt;
ein Vorspannelement (9), das im zylindrischen Loch (5) bereitgestellt ist oder mit dem das zylindrische Loch (5) gefüllt ist, wobei das Vorspannelement (9) so konfiguriert ist, dass es die Ausgangsstange (4) in Richtung der Basisendseite in der axialen Richtung drückt und bewegt, und
ein Führungselement (27), das an einem Basisendabschnitt des zylindrischen Lochs (5) befestigt ist,
wobei das Führungselement (27) umfasst:
Eine Gleitfläche (27a), die so geformt ist, dass sie das Bedienungselement (7) auffängt, und die so angeordnet ist, dass sie dem Bedienungselement (7) entgegenwirkt; und
einen Vorsprung (27b), der so konfiguriert ist, dass das Bedienungselement (7) am Herunterfallen gehindert wird und in Richtung des Bedienungselements (7) vorsteht.

## Revendications

1. Dispositif de serrage, comprenant :
un boîtier (1) ;
un élément à fiche cylindrique (3) faisant saillie du boîtier (1) ;
une bielle de sortie (4) insérée dans un orifice cylindrique de l'élément à fiche (3a) de l'élément à fiche cylindrique (3) afin de pouvoir se déplacer dans un sens axial de l'orifice cylindrique de l'élément à fiche (3a) ;
un élément d'enclenchement (14) inséré dans un orifice traversant (13) réalisé dans une paroi circonférentielle de l'élément à fiche (3), l'élément d'enclenchement (14) pouvant être déplacé dans l'orifice traversant (13) grâce au déplacement de la bielle de sortie (4) dans le sens axial, et étant en mesure d'établir un contact avec une partie d'enclenchement (25) d'un orifice de montage (24) formé dans un objet à serrer (WP) afin que l'élément à fiche (3) devienne insérable ; un orifice cylindrique (5) formé sur le côté de l'extrémité inférieure du boîtier (1), la bielle de sortie (4) étant insérée dans l'orifice cylindrique (5) afin de pouvoir être déplacée dans le sens axial ;
**caractérisé en ce que** le dispositif de serrage comprend en outre :
un élément opérationnel (7) agencé en rotation sur une face terminale du côté de l'extrémité inférieure de la bielle de sortie (4), l'élément opérationnel (7) étant configuré pour exercer une pression sur la bielle de sortie (4) et la déplacer vers le côté de l'extrémité antérieure dans le sens axial ; et un élément de sollicitation (9) agencé à l'intérieur de l'orifice cylindrique (5) ou dont on a rempli l'orifice cylindrique (5), l'élément de sollicitation (9) étant configuré pour exercer une pression sur la bielle de sortie (4) et la déplacer vers le côté de l'extrémité inférieure dans le sens axial,
un évidement (6) étant formé dans la face terminale du côté de l'extrémité inférieure de la bielle de sortie (4), et
l'élément opérationnel (7) étant accueilli en rotation dans l'évidement (6).

2. Dispositif de serrage selon la revendication 1,
l'élément opérationnel (7) étant une sphère ou un rouleau.

3. Dispositif de serrage selon la revendication 1 ou 2, comprenant en outre un élément de guidage (27) fixé sur une partie d'extrémité inférieure de l'orifice cylindrique (5),
l'élément de guidage (27) comprenant :
une surface de coulissement (27a) formée pour accrocher l'élément opérationnel (7) et étant agencée pour s'opposer à l'élément opérationnel (7) ; et
une saillie (27b) configurée pour empêcher l'élément opérationnel (7) de fléchir et de faire saillie vers l'élément opérationnel (7).

4. Dispositif de serrage selon la revendication 1, un orifice (41) étant agencé dans une partie centrale du fond de l'évidement (6) pour s'étendre dans le sens axial,
un aimant (42) étant installé dans l'orifice (41), et la bielle de sortie (4) et l'élément opérationnel (7) étant réalisés avec un matériau magnétique attiré vers l'aimant.

5. Dispositif de serrage selon une quelconque des revendications précédentes, des corps sphériques (45) étant agencés en rotation entre une surface inférieure de l'évidement (6) et l'élément opérationnel (7).

6. Dispositif de serrage selon la revendication 5,
un anneau anti-séparation (46) empêchant le détachement des corps sphériques (45) d'entre la surface inférieure de l'évidement (6) et de l'élément opérationnel (7) étant fixé sur une partie de l'extrémité inférieure de la bielle de sortie (4), et l'anneau anti-séparation (46) étant doté d'une saillie (46a) configurée pour empêcher l'élément opérationnel (7) de fléchir et de faire saillie vers l'élément opérationnel (7).

7. Dispositif de serrage comprenant :
un boîtier (1) ;
un élément à fiche cylindrique (3) faisant saillie du boîtier (1) ;
une bielle de sortie (4) insérée dans un orifice cylindrique de l'élément à fiche (3a) de l'élément à fiche cylindrique (3) afin de pouvoir être déplacée dans un sens axial de l'orifice cylindrique de l'élément à fiche (3a) ;
un élément d'enclenchement (14) inséré dans un orifice traversant (13) réalisé dans une paroi circonférentielle de l'élément à fiche (3), l'élément d'enclenchement (14) pouvant être déplacé dans l'orifice traversant (13) grâce au déplacement de la bielle de sortie (4) dans le sens axial, et étant en mesure d'établir un contact avec une partie d'enclenchement (25) d'un orifice de montage (24) formé dans un objet à serrer (WP) afin que l'élément à fiche (3) devienne insérable ; un orifice cylindrique (5) formé sur le côté de l'extrémité inférieure du boîtier (1), la bielle de sortie (4) étant insérée dans l'orifice cylindrique (5) afin de pouvoir être déplacée dans le sens axial ;
**caractérisé en ce que** le dispositif de serrage comprend en outre :
un élément opérationnel (7) agencé en rotation sur une face terminale du côté de l'extrémité inférieure de la bielle de sortie (4), l'élément opérationnel (7) étant configuré pour exercer une pression sur la bielle de sortie (4) et la déplacer vers le côté de l'extrémité antérieure dans le sens axial ; et un élément de sollicitation (9) agencé à l'intérieur de l'orifice cylindrique (5) ou dont on a rempli l'orifice cylindrique (5), l'élément de sollicitation (9) étant configuré pour exercer une pression sur la bielle de sortie (4) et la déplacer vers le côté de l'extrémité inférieure dans le sens axial,
l'élément opérationnel (7) étant une sphère ou un rouleau.

8. Dispositif de serrage comprenant :
un boîtier (1) ;
un élément à fiche cylindrique (3) faisant saillie du boîtier (1) ;
une bielle de sortie (4) insérée dans un orifice cylindrique (3a) de l'élément à fiche (3) afin de pouvoir être déplacé dans un sens axial de l'orifice cylindrique de l'élément à fiche (3a) ;
un élément d'enclenchement (14) inséré dans un orifice traversant (13) réalisé dans une paroi circonférentielle de l'élément à fiche (3), l'élément d'enclenchement (14) pouvant être déplacé dans l'orifice traversant (13) grâce au déplacement de la bielle de sortie (4) dans le sens axial, et étant en mesure d'établir un contact avec une partie d'enclenchement (25) d'un orifice de montage (24) formé dans un objet à serrer (WP) afin que l'élément à fiche (3) devienne insérable ; un orifice cylindrique (5) formé sur le côté de l'extrémité inférieure du boîtier (1), la bielle de sortie (4) étant insérée dans l'orifice cylindrique (5) afin de pouvoir être déplacée dans le sens axial ;
**caractérisé en ce que** le dispositif de serrage comprend en outre :
un élément opérationnel (7) agencé en rotation sur une face terminale du côté de l'extrémité inférieure de la bielle de sortie (4), l'élément opérationnel (7) étant configuré pour exercer une pression sur la bielle de sortie (4) et la déplacer vers le côté de l'extrémité antérieure dans le sens axial ;
un élément de sollicitation (9) agencé à l'intérieur de l'orifice cylindrique (5) ou dont on a rempli l'orifice cylindrique (5), l'élément de sollicitation (9) étant configuré pour exercer une pression sur la bielle de sortie (4) et la déplacer vers le côté de l'extrémité inférieure dans le sens axial, et
un élément de guidage (27) fixé sur une partie d'extrémité inférieure de l'orifice cylindrique (5),
l'élément de guidage (27) comprenant :
une surface de coulissement (27a) formée pour accrocher l'élément opérationnel (7) et étant agencée pour s'opposer à l'élément opérationnel (7) ; et
une saillie (27b) configurée pour empêcher l'élément opérationnel (7) de fléchir et de faire saillie vers l'élément opérationnel (7).
